# EUROPEAN PATENT SPECIFICATION

(11) **EP 2 743 297 B1**
(45) Date of publication and mention of the grant of the patent: **09.03.2016**
(21) Application number: 13189073.3
(22) Date of filing: 17.10.2013
(51) Int. Cl.: C08K 3/22, C08K 5/00

(54) **Flexible non-combustible fire-resistant material**
Flexibles, nichtbrennbares, feuerbeständiges Material
Matériau réfractaire non combustible flexible

(30) Priority: 14.12.2012 TW 101147363
(43) Date of publication of application: 18.06.2014
(73) Proprietor: Industrial Technology Research Institute, Hsinchu, 31040 Taiwan (TW)
(72) Inventor: Chen, Po-Ju, 300 Hsinchu City (TW); Jong, Sung-Jeng, 300 Hsinchu City (TW); Chen, Jer-Young, 300 Hsinchu City (TW); Chang, Yih-Her, 308 Hsin Chu County (TW); Lee, Pei-En, 220 New Taipei City (TW)
(74) Representative: Fuchs Patentanwälte Partnerschaft mbB

(56) References cited:
- WO-A1-2008/116610
- WO-A1-2012/116886

## Description

### TECHNICAL FIELD

The technical field relates to a fire-resistant material, and in particular to a flexible non-combustible fire-resistant material.

### BACKGROUND

According to the degree of fire resistance, fire-resistant materials are distinguished into flame retardant fire-resistant materials and non-combustible fire-resistant materials. The difference between a flame retardant fire-resistant material and a non-combustible fire-resistant material is that a flame retardant fire-resistant material can be ignited but extinguishes itself when removed from the fire source. However, a non-combustible fire-resistant material cannot be ignited. The fire resistance can be determined by the gross heating value. The gross heating value of an ordinary flame retardant fire-resistant material is about 5-20 MJ/Kg, and the gross heating value of a non-combustible fire-resistant material is less than about 3 MJ/Kg. Currently, these two types of fire-resistant materials are mainly used in architecture and construction, in the form of inorganic fibrous non-combustible plates and organic fire-resistant plates.

Commercial inorganic fibrous non-combustible plates are mostly formed by various inorganic materials with a small amount of inorganic binders through a compression-molding process, and are not flexible. On the other hand, the organic fire retardant plates are formed by using organic substances as the binder or the dispersion medium with various fire retardants through a compression-molding process, and they are flexible; nevertheless, the fire resistance of organic fire retardant plates is unable to exhibit a non-combustible effect.

In conclusion, a flexible fire-resistant material that meets the non-combustible standard is needed.

### SUMMARY

The disclosure provides a flexible non-combustible fire-resistant material, including: 5-20 parts by weight of polyurethane having an NCO content of about 1-50 wt%; 1-10 parts by weight of liquid fire retardant; and 50-90 parts by weight of hydroxyl-containing inorganic fire retardant, wherein the polyurethane reacts with the hydroxyl-containing inorganic fire retardant to form a chemical bond, and wherein the hydroxyl-containing inorganic fire retardant includes at least two different particle sizes.

### BRIEF DESCRIPTION OF THE DRAWINGS

The present disclosure can be more fully understood by reading the subsequent detailed description and examples with references made to the accompanying drawings, wherein:

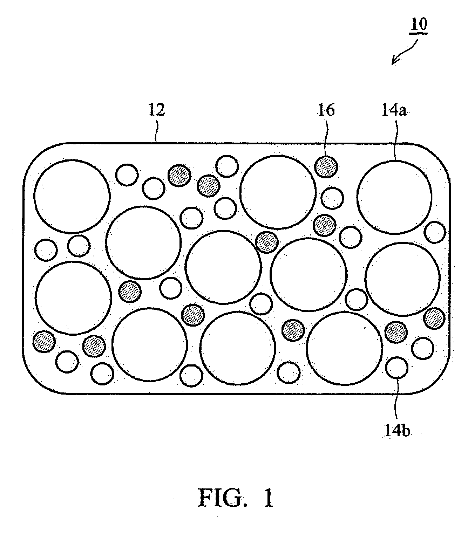

Fig. 1 is a schematic view of a flexible non-combustible fire-resistant material 10 in accordance with an exemplary embodiment.

### DETAILED DESCRIPTION

Below, exemplary embodiments will be described in detail with reference to accompanying drawings so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

Refer to Fig. 1, which illustrates a schematic view of a flexible non-combustible fire-resistant material 10 in accordance with an exemplary embodiment. The disclosure provides a fire-resistant material having non-combustibility and flexibility by utilizing polyurethane as the organic liquid binder in combination with the fireproofing ability of the inorganic fire retardant, and the fabricating process is simple. In one embodiment, the fire-resistant material product (thickness of about 1 mm) may have a radius of curvature of about 1-6 cm and a gross heat value of about 2 MJ/Kg.

The disclosure provides a flexible non-combustible fire-resistant material 10, including: 5-20 parts by weight of polyurethane binder 12 having an NCO content of about 1-50 wt%; 1-10 parts by weight of liquid fire retardant 16; and 50-90 parts by weight of hydroxyl-containing inorganic fire retardants 14a and 14b. In one embodiment, the weight ratio of the polyurethane binder 12, the liquid fire retardant 16, and the hydroxyl-containing inorganic fire retardants 14a and 14b is 10-15 : 1-4 : 60-86. The polyurethane binder 12 may be formed by reacting polyisocyanate with polyol, and the polyurethane binder 12 may include: polyurethane polymer, polyurethane monomer, polyurethane prepolymer, or a combination thereof. The polyisocyanate may include: toluene diisocyanate (TDI), diphenylmethane-4,4'-diisocyanate (MDI), isophorone diisocyanate (IPDI), hexamethylene diisocyanate (HDI), 4,4'-dicyclohexylmethane diisocyanate (H₁₂MDI), p-phenylene diisocyanate (PPDI), (p,p'-bisphenyl diisocyanate (BPDI), or a combination thereof. The polyol is a polyol having two or more active groups, including polyether polyols and polyester polyols, or a combination thereof.

In the embodiments of the disclosure, the hydroxyl-containing inorganic fire retardants 14a and 14b having a combination of at least two different particle sizes is employed to maximize the amount of the fire retardant as well as increase the fire resistance. Taking the viscosity of the polyurethane binder/inorganic fire retardant mixture, the generation of flaming drops by molded fire-resistant material under exposure to flame or ignition sources, and the improvement to fireproofing effectiveness into full consideration, the particle sizes of inorganic fire retardant suitable for use and the ratio between different particle sizes of inorganic fire retardant may be as follows. In one embodiment, the fire retardants 14a and 14b may include a combination of hydroxyl-containing fire retardants having particles sizes of 0.5-5µm, 5-20µm, and 20-100µm in a weight ratio of about 1: 0.1-3: 1-6, or about 1: 0.5-2: 2-5. The hydroxyl-containing fire retardants may include aluminum hydroxide, magnesium hydroxide, hydroxyl-containing compound (for example, modified silicon oxide, titanium oxide, or calcium carbonate), or a combination thereof. According to an embodiment, the hydroxyl-containing inorganic fire retardant 14a and 14b may be present in an amount of about 50-95 wt%, or more than 80 wt%, based on the total weight of the fire-resistant material 10. It should be realized, the hydroxyl group of the fire retardant will react with the isocyanate (-NCO) group of the polyisocyanate, thereby increasing the fire resistance of the fire-resistant plates and reducing the amount of dissolved liquid under a high temperature. Moreover, the reaction forms a chemical bond between the fire retardant and the polyurethane, thus strengthening the structural integrity of the composite. The resulting fire-resistant material does not melt, shrink or produce flaming drops under exposure to flame or ignition sources. According to another embodiment, the hydroxyl-containing inorganic fire retardants 14a and 14b may be present in an amount of about 80-90 wt%, based on the total weight of the fire-resistant material 10.

In addition, still referring to Fig. 1, liquid fire retardant 16 is utilized to replace a portion of the polyurethane binder 12. The addition of the liquid fire retardant 16 allows the total additive amount of fire retardant to be increased without changing the solid content. As a result, the gross heat value of the fire-resistant material can be less than 3 MJ/Kg. The liquid fire retardant 16 may include an additive-type liquid fire retardant, a reactive-type liquid fire retardant, or a combination thereof. In one embodiment, the liquid fire retardant 16 is an additive-type liquid fire retardant, including phosphorus containing liquid fire retardants, such as triethyl phosphate (TEP), dimethyl methylphosphonate (DMMP), diethyl ethylphosphonate, dimethylpropyl phosphonate, or isopropyl triphenyl phosphate (IPPP). In one embodiment, the liquid fire retardant may be a reactive-type liquid fire retardant having at least a hydroxyl group or an amino group, wherein the hydroxyl group or the amino group reacts with the polyurethane binder 12 to form a chemical bond. The reactive-type liquid fire retardant may include phosphorus-containing or nitrogen-containing reactive-type liquid fire retardant, wherein the phosphorus-containing reactive-type liquid fire retardant may be, for example, tris (dipropyleneglycol) phosphite, N, N-bis(2-hydroxyethyl) aminomethyl phosphonic acid diethyl ester (BHAPE), N, N-bis(2-hydroxyethyl) aminomethyl phosphonic acid dimethyl ester, or commercial goods such as OP550, Fyrol 6, FRC-2, PTE-100, or the like.

In one embodiment, the flexible non-combustible fire-resistant material 10 may optionally further include 0.1-10 parts by weight of phosphorus-containing solid fire retardant, and/or 0.1-10 parts by weight of nitrogen-containing solid fire retardant. In another embodiment, the flexible non-combustible fire-resistant material 10 includes 2-10 parts by weight of phosphorus-containing solid fire retardant, and/or 0.5-5 parts by weight of nitrogen-containing solid fire retardant. The phosphorus-containing solid fire retardant includes ammonium polyphosphate (APP), organiphosphate, phosphonate, phosphite, or a combination thereof. The nitrogen-containing solid fire retardant include melamine, salt of melamine (for example, melamine cyanurate, dimelamine pyrophosphate (DMPY), orthoboric acid, monomelamine phosphate (DMP), melamine polyphosphate), or a combination thereof. The addition of phosphorus-containing and/or nitrogen-containing solid fire retardants with the inorganic fire retardant and the liquid fire retardant may result in the total amount of the fire retardants to be more than 80 wt% based on the total weight of the fire-resistant material. Moreover, the fire resistance of the fire-resistant material may be increased to non-combustible level.

The disclosure provides a fire-resistant material having flexibility and non-combustibility. On one hand, inorganic fire retardants having at least two different particle sizes are employed. Compared to the use of fire retardants with single particle size, utilizing inorganic fire retardants having at least two different particle sizes increase the permissible additive amount of inorganic fire retardants, thereby increasing the fire resistance. On the other hand, the disclosure replaces the organic binder with liquid fire retardants. As a result, the fire resistance can be increased without changing the solid/liquid ratio. In one embodiment, the fire-resistant material is flexible (radius of curvature of about 1-6 cm at the thickness of 1 mm). Meanwhile, having inorganic fire retardants with at least two different particle sizes employed with the addition of liquid fire retardant can increase the total amount of fire retardants, thereby producing a non-combustible fire-resistant material (gross heat value less than 3 MJ/Kg). The fire resistance of the fire-resistant material is far superior to that of the organic flexible fire-resistant material currently available. Note that, if the additive amount of liquid fire retardant is increased, the material cannot be molded since the liquid content is too high. The disclosure effectively increases the additive amount of fire retardant in the fire-resistant material by utilizing the hydroxyl-containing inorganic fire retardant having different particle sizes with liquid fire retardant, thereby increasing the fire resistance to form a fire-resistant material having flexibility and non-combustibility.

In addition, the fabricating process for the flexible non-combustible fire-resistant material of the disclosure is simple since the powder and the liquid can be directly mixed without adding any solvent. Moreover, since a chemical bond is formed by the reaction between the polyurethane and the hydroxyl group of the fire retardant, the structural integrity of the composite is thereby strengthened. Thus, the resulting fire-resistant foam does not melt, shrink or produce flaming drops under exposure to flame or ignition sources. Furthermore, the flexible non-combustible fire-resistant material of the disclosure is applicable in various applications since it can be easily adhered to or composited with other materials due to its good adhesion.

The following description is examples of the disclosure. It should be noted that, although silver is used as the nano-metal wires in the following examples, the nano-metal wires are not limited to silver.

### EXAMPLE 1

65g of 1µm particle size of aluminum hydroxide powders (H-42M manufactured by Showa Denko K.K.), 75g of 8µm particle size of aluminum hydroxide powders (H-32M manufactured by Showa Denko K.K.), 252.5g of 55µm particle size of aluminum hydroxide powders (H-10M manufactured by Showa Denko K.K.), 30g of ammonium polyphosphate (APP), and 7.5g of melamine were premixed dryly to form a first mixture. Next, the first mixture was added into 60g of polyurethane (CPU-325L manufactured by Taiwan PU Corporation), then 10g of reactive-type phosphorus containing fire retardant was added (PTE-110 manufactured by San Fang Chemical Industry Co., LTD.) and stirred at 250 rpm for 30 minutes, to form a second mixture. Finally, the second mixture was disposed in a mold, and a compression molding process was performed at 150 and a pressure of 110 Kgf/cm² to form a flexible non-combustible fire-resistant material.

### EXAMPLE 2

71g of 1µm particle size of aluminum hydroxide powders (H-42M manufactured by Showa Denko K.K.), 82g of 8µm particle size of aluminum hydroxide powders (H-32M manufactured by Showa Denko K.K.), and 277g of 55µm particle size of aluminum hydroxide powders (H-10M manufactured by Showa Denko K.K.) were premixed dryly to form a first mixture. Next, the first mixture was added into 60g of polyurethane (CPU-325L manufactured by Taiwan PU Corporation), then 10g of reactive-type phosphorus containing fire retardant was added (PTE-110 manufactured by San Fang Chemical Industry Co., LTD.) and stirred at 250 rpm for 30 minutes, to form a second mixture. Finally, the second mixture was disposed in a mold, and a compression molding process was performed at 150 °C and a pressure of 110 Kgf/cm² to form a flexible non-combustible fire-resistant material.

### EXAMPLE 3

65g of 1µm particle size of magnesium hydroxide powders (S6 manufactured by Konoshima Chemical Co., Ltd.), 75g of 8µm particle size of aluminum hydroxide powders (H-32M manufactured by Showa Denko K.K.), 252.5g of 55µm particle size of aluminum hydroxide powders (H-10M manufactured by Showa Denko K.K.), 30g of ammonium polyphosphate (APP), and 7.5g of melamine were premixed dryly to form a first mixture. Next, the first mixture was added into 55g of polyurethane (CPU-325L manufactured by Taiwan PU Corporation), then 15g of reactive-type phosphorus containing fire retardant was added (PTE-110 manufactured by San Fang Chemical Industry Co., LTD.) and stirred at 250 rpm for 30 minutes, to form a second mixture. Finally, the second mixture was disposed in a mold, and a compression molding process was performed at 150 °C and a pressure of 110 Kgf/cm² to form a flexible non-combustible fire-resistant material.

### EXAMPLE 4

65g of 1µm particle size of aluminum hydroxide powders (H-42M manufactured by Showa Denko K.K.), 75g of 8µm particle size of aluminum hydroxide powders (H-32M manufactured by Showa Denko K.K.), 252.5g of 53µm particle size of aluminum hydroxide powders (H-10M manufactured by Showa Denko K.K.), 30g of ammonium polyphosphate (APP), and 7.5g of melamine were premixed dryly to form a first mixture. Next, the first mixture was added into 50g of polyurethane (CPU-325L manufactured by Taiwan PU Corporation), then 20g of reactive-type phosphorus containing fire retardant was added (PTE-110 manufactured by San Fang Chemical Industry Co., LTD.) and stirred at 250 rpm for 30 minutes, to form a second mixture. Finally, the second mixture was disposed in a mold, and a compression molding process was performed at 150 °C and a pressure of 110 Kgf/cm² to form a flexible non-combustible fire-resistant material.

### COMPARATIVE EXAMPLE 1

295g of 1µm particle size of aluminum hydroxide powders (H-42M manufactured by Showa Denko K.K.) was added into 70g of polyurethane (CPU-325L manufactured by Taiwan PU Corporation), and then stirred at 250 rpm for 30 minutes to form a first mixture. Next, the first mixture was disposed in a mold, and a compression molding process was performed at 150 °C and a pressure of 110 Kgf/cm² to form a fire-resistant material.

### COMPARATIVE EXAMPLE 2

71g of 1µm particle size of aluminum hydroxide powders (H-42M manufactured by Showa Denko K.K.), 82 g of 8µm particle size of aluminum hydroxide powders (H-32M manufactured by Showa Denko K.K.), 277g of 55µm particle size of aluminum hydroxide powders (H-10M manufactured by Showa Denko K.K.) were uniformly dry mixed to form a first mixture. Next, the first mixture was added into 70g of polyurethane (CPU-325L manufactured by Taiwan PU Corporation), and then stirred at 250 rpm for 30 minutes to form a second mixture. Finally, the second mixture was disposed in a mold, and a compression molding process was performed at 150 °C and a pressure of 110 Kgf/cm² to form a fire-resistant material.

### COMPARATIVE EXAMPLE 3

71g of µm particle size of aluminum hydroxide powders (H-42M manufactured by Showa Denko K.K.), 82g of 8µm particle size of aluminum hydroxide powders (H-32M manufactured by Showa Denko K.K.), and 287g of 55µm particle size of aluminum hydroxide powders (H-10M manufactured by Showa Denko K.K.) were premixed dryly to form a first mixture. Next, the first mixture was added into added into 60g of polyurethane (CPU-325L manufactured by Taiwan PU Corporation). The solid powders could not be mixed with the polyurethane in this example due to the excessive amount of solid powders.

### COMPARATIVE EXAMPLE 4

440g of reactive-type phosphorus containing fire retardant (PTE-110 manufactured by San Fang Chemical Industry Co., LTD.) was added into 60g of polyurethane (CPU-325L manufactured by Taiwan PU Corporation). The mixture could not be molded in this example since the liquid fire retardant content was too high.

Table 1 shows the total amount of the fire retardant, the gross value, and the radius of curvature of the Examples and Comparative Examples. Referring to Comparative Example 1 and Comparative Example 2, using inorganic solid fire retardants with different particle sizes can result in a high additive amount of fire retardants of 86 % based on the total weight. However, the fire-resistant material produced could not reach the non-combustible level (gross heat value of 5.06 MJ/Kg). Referring to Comparative Example 3, with more solid inorganic fire retardant added therein, the solid powders could not be added into the liquid polyurethane binder since the weight ratio of the powders is too high. On the other hand, liquid fire retardant was added into the polyurethane binder alone in Comparative Example 4, this results in the composition being liquid form; thus, the composition could not be molded.

Referring to Comparative Example 2 and Example 2, the inorganic fire retardant components and the ratio thereof are the same in Comparative Example 2 and Example 2. However, reactive-type liquid phosphorus-containing fire retardant was additionally added in Example 2. As a result, the total amount of fire retardants has raised to 88 wt% based on the total weight, and the resulting fire-resistant material thereby reached the non-combustible level (gross heat value of 2.04 MJ/Kg) and provided flexibility (radius of curvature of 5 cm at a thickness of 1 mm).

Furthermore, in Examples 3 and 4, the fire resistance of the resulting fire-resistant material could be improved (lower gross heat value) by adding the phosphorus-containing and/or nitrogen-containing solid fire retardants as well as increasing the amount of liquid fire retardant. The resulting fire-resistant material also provided flexibility (radius of curvature of 2 cm at a thickness of 1 mm).

**Table 1**

| | Example 1 | Example 2 | Example 3 | Example 4 | Comparative Example 1 | Comparative Example 2 | Comparative Example 3 | Comparative Example 4 |
|---|---|---|---|---|---|---|---|---|
| amount of 1µm-Al(OH)₃ | 13 wt% | 14.20 wt% | 13 wt% (1µm-magnesium hydroxide was used) | 13 wt% | single particle size of 1 µm-Al(OH)₃ was used | 14.20 wt% | 14.20 wt% | 0 wt% |
| amount of 8µm-Al(OH)₃ | 15 wt% | 16.40 wt% | 15 wt% | 15 wt% | | 16.40 wt% | 16.40 wt% | |
| amount of 55µm-Al(OH)₃ | 50.5 wt% | 55.40 wt% | 50.5 wt% | 50.5 wt% | | 55.40 wt% | 57.40 wt% | |
| amount of ammonium polyphosphate | 6 wt% | 0 wt% | 6 wt% | 6 wt% | | 0 wt% | 0 wt% | |
| amount of melamine | 1.5 wt% | 0 wt% | 1.5 wt% | 1.5 wt% | | 0 wt% | 0 wt% | |
| amount of pentaerythritol | 0 wt% | 0 wt% | 0 wt% | 0 wt% | | 0 wt% | 0 wt% | |
| total amount of solid fire retardant | 86 wt% | 86 wt% | 86 wt% | 86 wt% | 59 wt% | 86 wt% | 88 wt% | 0 wt% |
| amount of liquid fire retardant | 2 wt% | 2 wt% | 3 wt% | 4 wt% | 0 wt% | 0 wt% | 0 wt% | 88 wt% |
| total amount of fire retardant | 88 wt% | 88 wt% | 89 wt% | 90 wt% | 59 wt% | 86 wt% | 88 wt% | 88 wt% |
| amount of polyurethane | 12 wt% | 12 wt% | 11 wt% | 10 wt% | 41 wt% | 14 wt% | 12 wt% | 12 wt% |
| gross heat value (MJ/Kg) | 1.97 | 2.04 | 1.68 | 1.55 | about 32 | 5.06 | excessive powders result in an unstirrably high viscosity | could not be molded |
| radius of curvature(thickness of about 1mm) | 2 cm | 5 cm | 2 cm | 2 cm | <1 cm | 5 cm | | |

## Claims

1. A flexible non-combustible fire-resistant material (10), comprising:
5-20 parts by weight of polyurethane (12) having an NCO content of about 1-50 wt%;
1-10 parts by weight of liquid fire retardant (16); and
50-90 parts by weight of hydroxyl-containing inorganic fire retardant (14a and 14b),
wherein the polyurethane (12) reacts with the hydroxyl-containing inorganic fire retardant (14a and 14b) to form a chemical bond, and wherein the hydroxyl-containing inorganic fire retardant (14a and 14b) comprises at least two different particle sizes.

2. The flexible non-combustible fire-resistant material (10) of claim 1, wherein the gross heat value of the flexible non-combustible fire-resistant material (10) is less than 3 MJ/Kg.

3. The flexible non-combustible fire-resistant material (10) of claim 1 or 2, wherein the hydroxyl-containing inorganic fire retardant (14a and 14b) comprises particles sizes of 0.5-5µm, 5-20µm, and 20-100µm in a weight ratio of 1: 0.1-3: 1-6.

4. The flexible non-combustible fire-resistant material (10) of one of claims 1 to 3, wherein the liquid fire retardant (16) comprises: additive-type liquid fire retardant, reactive-type liquid fire retardant, or a combination thereof.

5. The flexible non-combustible fire-resistant material (10) of claim 4, wherein the additive-type liquid fire retardant comprises: triethyl phosphate (TEP), dimethyl methylphosphonate (DMMP), diethyl ethylphosphonate, dimethylpropyl phosphonate, isopropyl triphenyl phosphate (IPPP), or a combination thereof.

6. The flexible non-combustible fire-resistant material (10) of claim 4, wherein the reactive-type liquid fire retardant at least comprises a hydroxyl group or an amino group, the hydroxyl group or the amino group reacting with the polyurethane to form a chemical bond.

7. The flexible non-combustible fire-resistant material (10) of one of claims 4 to 6, wherein the reactive-type liquid fire retardant comprises phosphorus-containing or nitrogen-containing reactive-type liquid fire retardant.

8. The flexible non-combustible fire-resistant material (10) of one or more of claims 4 to 7, wherein the reactive-type liquid fire retardant comprises tris (dipropyleneglycol) phosphite, N, N-bis(2-hydroxyethyl) aminomethyl phosphonic acid diethyl ester (BHAPE), N, N-bis(2-hydroxyethyl) aminomethyl phosphonic acid dimethyl ester, or a combination thereof.

9. The flexible non-combustible fire-resistant material (10) of one or more of claims 1 to 8, further comprising:
0.1-10 parts by weight of phosphorus-containing solid fire retardant; and/or
0.1-10 parts by weight of nitrogen-containing solid fire retardant.

10. The flexible non-combustible fire-resistant material (10) of one or more of claims 1 to 9, wherein flexible non-combustible fire-resistant material (10) has a radius of curvature of about 1-6 cm at a thickness of 1 mm.

## Patentansprüche

1. Flexibles, nicht brennbares, feuerbeständiges Material (10), umfassend:
5-20 Gewichtsteile Polyurethan (12) mit einem NCO-Gehalt von etwa 1-50 Gew.-%;
1-10 Gewichtsteile flüssiges Flammschutzmittel (16); und
50-90 Gewichtsteile hydroxylhaltiges anorganisches Flammschutzmittel (14a und 14b), wobei sich das Polyurethan (12) mit dem hydroxylhaltigen anorganischen Flammschutzmittel (14a und 14b) umsetzt, wobei eine chemische Bindung gebildet wird, und wobei das hydroxylhaltige anorganische Flammschutzmittel (14a und 14b) mindestens zwei unterschiedliche Teilchengrößen umfasst.

2. Flexibles, nicht brennbares, feuerbeständiges Material (10) nach Anspruch 1, wobei der spezifische Brennwert des flexiblen, nicht brennbaren, feuerbeständigen Materials (10) weniger als 3 MJ/kg beträgt.

3. Flexibles, nicht brennbares, feuerbeständiges Material (10) nach Anspruch 1 oder 2, wobei das hydroxylhaltige anorganische Flammschutzmittel (14a und 14b) Teilchengrößen von 0,5-5 µm, 5-20 µm und 20-100 µm in einem Gewichtsverhältnis von 1:0,1-3:1-6 umfasst.

4. Flexibles, nicht brennbares, feuerbeständiges Material (10) nach einem der Ansprüche 1 bis 3, wobei das flüssige Flammschutzmittel (16) umfasst: flüssiges Flammschutzmittel vom Additiv-Typ, flüssiges Flammschutzmittel vom reaktiven Typ oder eine Kombination davon.

5. Flexibles, nicht brennbares, feuerbeständiges Material (10) nach Anspruch 4, wobei das flüssige Flammschutzmittel vom Additiv-Typ umfasst: Triethylphosphat (TEP), Dimethylmethylphosphonat (DMMP), Diethylethylphosphonat, Dimethylpropylphosphonat, Isopropyltriphenylphosphat (IPPP) oder eine Kombination davon.

6. Flexibles, nicht brennbares, feuerbeständiges Material (10) nach Anspruch 4, wobei das flüssige Flammschutzmittel vom reaktiven Typ mindestens eine Hydroxylgruppe oder eine Aminogruppe umfasst, wobei sich die Hydroxylgruppe oder die Aminogruppe mit dem Polyurethan umsetzt, wobei eine chemische Bindung gebildet wird.

7. Flexibles, nicht brennbares, feuerbeständiges Material (10) nach einem der Ansprüche 4 bis 6, wobei das flüssige Flammschutzmittel vom reaktiven Typ phosphorhaltiges oder stickstoffhaltiges flüssiges Flammschutzmittel vom reaktiven Typ umfasst.

8. Flexibles, nicht brennbares, feuerbeständiges Material (10) nach einem oder mehr der Ansprüche 4 bis 7, wobei das flüssige Flammschutzmittel vom reaktiven Typ Tris(dipropylenglycol)phosphit, N,N-Bis(2-hydroxyethyl)aminomethylphosphon-säurediethylester (BHAPE), N,N-Bis(2-hydroxyethyl)aminomethylphosphonsäure-dimethylester oder eine Kombination davon umfasst.

9. Flexibles, nicht brennbares, feuerbeständiges Material (10) nach einem oder mehr der Ansprüche 1 bis 8, ferner umfassend:
0,1-10 Gewichtsteile phosphorhaltiges festes Flammschutzmittel; und/oder
0,1-10 Gewichtsteile stickstoffhaltiges festes Flammschutzmittel.

10. Flexibles, nicht brennbares, feuerbeständiges Material (10) nach einem oder mehr der Ansprüche 1 bis 9, wobei das flexible, nicht brennbare, feuerbeständige Material (10) einen Krümmungsradius von etwa 1-6 cm bei einer Dicke von 1 mm aufweist.

## Revendications

1. Matériau non combustible, résistant au feu, flexible (10), comprenant :
de 5 à 20 parties en poids de polyuréthanne (12) présentant une teneur en NCO de 1 à 50 % en poids environ ;
de 1 à 10 parties en poids de retardateur de flamme liquide (16) ; et
de 50 à 90 parties en poids de retardateur de flamme inorganique contenant de l'hydroxyle (14a et 14b), dans lequel le polyuréthanne (12) réagit avec le retardateur de flamme inorganique contenant de l'hydroxyle (14a et 14b) afin de former une liaison chimique, et dans lequel le retardateur de flamme inorganique contenant de l'hydroxyle (14a et 14b) comprend des particules d'au moins deux tailles de particules différentes.

2. Matériau non combustible, résistant au feu, flexible (10) selon la revendication 1, dans lequel la chaleur de combustion brute du matériau non combustible, résistant au feu, flexible (10) est inférieure à 3 MJ/Kg.

3. Matériau non combustible, résistant au feu, flexible (10) selon la revendication 1 ou 2, dans lequel le retardateur de flamme inorganique contenant de l'hydroxyle (14a et 14b) comprend des tailles de particules de 0,5 à 5 µm, de 5 à 20 µm, et de 20 à 100 µm suivant un rapport massique de 1 : 0,1 à 3 : 1 à 6.

4. Matériau non combustible, résistant au feu, flexible (10) selon une des revendications 1 à 3, dans lequel le retardateur de flamme liquide (16) comprend : un retardateur de flamme liquide du type additif, un retardateur de flamme liquide du type réactif ou un mélange de ceux-ci.

5. Matériau non combustible, résistant au feu, flexible (10) selon la revendication 4, dans lequel le retardateur de flamme liquide du type additif comprend : du phosphate de triéthyle (TEP), du méthylphosphonate de diméthyle (DMMP), de l'ethylphosphonate de diéthyle, du phosphonate de diméthylpropyle, du phosphate de triphényle isopropyle (IPPP), ou un mélange de ceux-ci.

6. Matériau non combustible, résistant au feu, flexible (10) selon la revendication 4, dans lequel le retardateur de flamme liquide du type réactif comprend au moins un groupe hydroxyle ou un groupe amino, le groupe hydroxyle ou le groupe amino réagissant avec le polyuréthanne afin de former une liaison chimique.

7. Matériau non combustible, résistant au feu, flexible (10) selon une des revendications 4 à 6, dans lequel le retardateur de flamme liquide du type réactif comprend un retardateur de flamme liquide du type réactif contenant du phosphore ou contenant de l'azote.

8. Matériau non combustible, résistant au feu, flexible (10) selon une ou plusieurs des revendications 4 à 7, dans lequel le retardateur de flamme liquide du type réactif comprend du phosphite de tris(dipropylèneglycol), de l'ester diéthylique d'acide phosphonique N, N-bis(2-hydroxyéthyle) aminométhyle (BHAPE), de l'ester diméthylique d'acide phosphonique N, N-bis(2-hydroxyéthyl) aminométhyle, ou un mélange de ceux-ci.

9. Matériau non combustible, résistant au feu, flexible (10) selon une ou plusieurs des revendications 1 à 8, comprenant, en outre :
de 0,1 à 10 parties en poids de retardateur de flamme solide contenant du phosphore ; et/ou
de 0,1 à 10 parties en poids de retardateur de flamme solide contenant de l'azote.

10. Matériau non combustible, résistant au feu, flexible (10) selon une ou plusieurs des revendications 1 à 9, dans lequel le matériau non combustible, résistant au feu, flexible (10) présente un rayon de courbure de 1 à 6 cm pour une épaisseur de 1 mm environ.
